# EUROPEAN PATENT SPECIFICATION

(11) **EP 1 581 935 B1**
(45) Date of publication and mention of the grant of the patent: **08.08.2007**
(21) Application number: 03775757.2
(22) Date of filing: 04.12.2003
(51) Int. Cl.: G11B 7/007, G11B 27/24

(54) **ADDITIONAL DATA CHANNEL IN PREGROOVE**
ZUSÄTZLICHER DATENKANAL IN DER SPURRILLE
CANAL DE DONNEES SUPPLEMENTAIRE DANS UN PRE-SILLON

(30) Priority: 30.12.2002 EP 02080591
(43) Date of publication of application: 05.10.2005
(73) Proprietor: Koninklijke Philips Electronics N.V., 5621 BA Eindhoven (NL)
(72) Inventor: MEINDERS, Erwin, R., NL-5656 AA Eindhoven (NL); MARTENS, Hubert, C., F., NL-5656 AA Eindhoven (NL)
(74) Representative: van Oudheusden-Perset, Laure E.
(86) International application number: PCT/IB2003/005924
(87) International publication number: WO 2004/059623

(56) References cited:
- EP-A- 0 786 767
- EP-A- 0 986 051
- US-A- 6 031 816
- US-A1- 2002 060 965

## Description

The invention relates to a record carrier of a writable type for recording information by writing marks in a track.

The invention further relates to a device for scanning the record carrier and a method for providing information via the record carrier.

A record carrier for recording information is known from US 5,210,738. The record carrier comprises a guide groove, usually called pregroove, for indicating the position of tracks in which the information is to be represented in a predefined manner by recording optically readable marks. The pregroove is meandering by a periodic excursion of the track in a transverse direction (further denoted as wobble). The wobble is varied in period according to first additional information and varied in amplitude according to second additional information. A scanning device is provided with a head for generating a beam of radiation for scanning the track. The marks are detected during said scanning by variations of the reflectivity of the scanned surface. The variations in intensity of the reflected radiation are detected by a main detector system. Furthermore the scanning device has auxiliary detectors for generating tracking servo signals based on the wobble for detecting a spatial deviation of the head with respect to the track. The tracking servo signals are used to control actuators to position the head opposite the track. The variations in period of the wobble are detected for retrieving the fist auxiliary information, e.g. address information. The variations in amplitude of the wobble are detectable via the auxiliary detectors for retrieving the second auxiliary information. A problem of the known record carrier is that the amount of second auxiliary information is limited. The variations in period and the variations in amplitude are both influencing the meandering, because the pregroove transverse position is modulated both in period and in amplitude. Both variations have to be separable based on signals from the auxiliary detectors.

Document EP 0 786 767 describes an optical disk having a track, wherein one of the sidewalls of a groove is wobbled by a wobble signal, and is provided with a notch in the track having a different frequency from the wobble signal. The absolute position in the track is detected by the notch, and information marks are stored with a recording/reproducing clock synchronized with that position. The information marks and the notch may be detected from the reflected energy. The length of the notch is in the same order of the recording mark. The recording mark should not be recorded adjacent to the notch.

Therefore it is an object of the invention to provide a record carrier, a scanning device and method for providing information to a user via an additional data channel in a more convenient way.

According to a first aspect of the invention the object is achieved with a record carrier of a writable type as defined in claim 1.

According to a second aspect of the invention the object is achieved with a device for scanning a track on the record carrier via a beam of radiation as defined in claim 7.

According to a third aspect of the invention the object is achieved with a method of providing information to a user via a record carrier as defined in claim 9.

The effect of the measures is that the pregroove has a varying shape, e.g. depth or width, which shape variation is modulated for encoding secondary information. The varying shape results in variations of the reflected radiation the pregroove modulation which are detectable in the same way as variations due to the recorded marks. This has the advantage that the pregroove modulation is also detectable on devices not equipped with auxiliary detectors for retrieving information from the wobble, such as devices for only scanning (pre-)recorded optical discs. Furthermore a user can be enabled to store information, e.g. specific content, based on auxiliary information available on the writable record carrier by the pregroove modulation. In addition it is noted that the main information on the record carrier can be read (obviously without the benefit of additional data from the pregroove modulation) by existing scanning devices without pregroove modulation, providing backwards compatibility.

The invention is also based on the following recognition. The first type of variations due to the marks generates a read signal at a high frequency range, because the data capacity of the marks is the main design purpose of a data storage system. The inventors have seen that at least lower frequency parts of the spectrum of the read signal are available to be modulated by variations of the pregroove. Using sophisticated signal processing first type variations in the read signal can be separated from other variations of the read signal. On the contrary, further modulating the amplitude of the wobble as in US 5,210,738 is limited by the modulation of the period already present in the wobble, which period has a substantially lower frequency range than the read signal. Further the detector systems and signal processing available for handling the second type of variations for generating servo tracking signals usually have a limited frequency range. Hence an additional data channel with a larger data capacity is made available by the pregroove modulation according to the invention.

In an embodiment of the record carrier said first type of variations due to the marks are substantially in a first frequency range, whereas said first type of variations due to the pregroove modulation are substantially in a different frequency range. This has the advantage that the variations due to the pregroove modulation can be easily filtered from a read signal detecting said first type of variations.

In an embodiment of the record carrier said second type of variations due to the wobble are substantially in a wobble frequency range, whereas said first type of variations due to the pregroove modulation are substantially in a different frequency range. This has the advantage that interference or crosstalk between the wobble modulation and pregroove modulation is reduced.

In an embodiment of the record carrier the pregroove modulation is representing program information, in particular access information for accessing information to be recorded by the marks, audio or video processing software, or content information representing at least part of an audio or video program. This has the advantage that a user can store or retrieve user information based on or while applying the program information.

In an embodiment of the device the main detector means comprises a filter unit for filtering a frequency range from a read signal detected by a main detector, said frequency range being set for filtering said first type of variations due to the pregroove modulation. This has the advantage that variations due to the pregroove can be easily isolated and/or removed from the read signal.

Further preferred embodiments of the device according to the invention are given in the further claims.

These and other aspects of the invention will be apparent from and elucidated further with reference to the embodiments described by way of example in the following description and with reference to the accompanying drawings, in which
Figure 1a shows a disc-shaped record carrier,
Figure 1b shows a cross-section taken of the record carrier,
Figure 1c shows an example of a wobble of the track,
Figure 1d shows a wobble having a pregroove modulation,
Figure 2 shows a scanning device having pregroove modulation detection,
Figure 3 shows schematically an unwritten and written track, and
Figure 4 shows a reflection profile along the cross-track direction.

In the Figures, elements which correspond to elements already described have the same reference numerals.

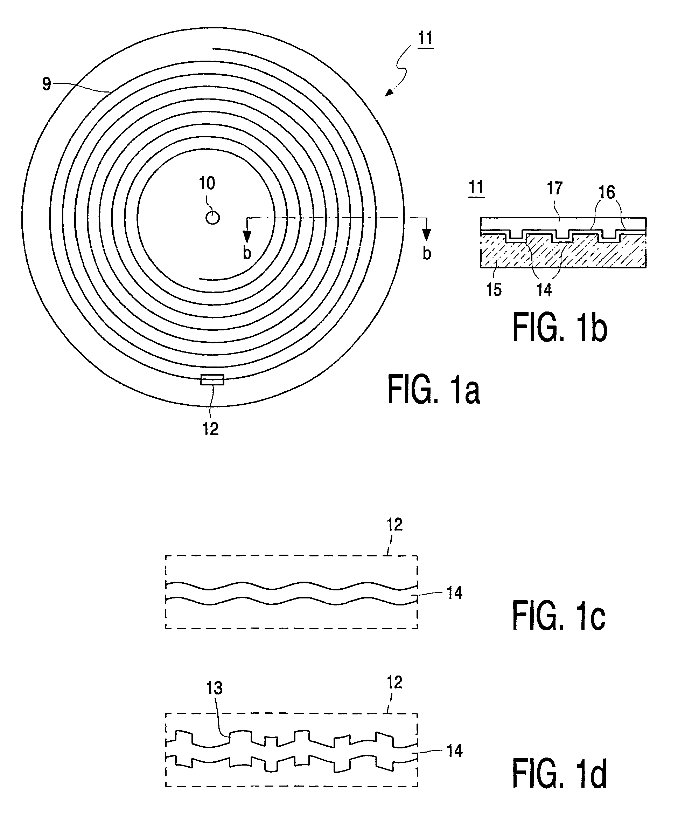

Figure 1a shows a disc-shaped record carrier 11 having a track 9 and a central hole 10. The track 9 is arranged in accordance with a spiral pattern of turns constituting substantially parallel tracks on an information layer. The record carrier may be an optical disc having an information layer of a recordable type. Examples of a recordable disc are the CD-R and CD-RW, and the DVD+RW. The track 9 on the recordable type of record carrier is indicated by a pre-embossed track structure provided during manufacture of the blank record carrier, for example a pregroove. Recorded information is represented on the information layer by optically detectable marks recorded along the track. The marks are constituted by variations of a first physical parameter and thereby have different optical properties than their surroundings, e.g. variations in reflection.

Figure 1b is a cross-section taken along the line b-b of the record carrier 11 of the recordable type, in which a transparent substrate 15 is provided with a recording layer 16 and a protective layer 17. The track structure is constituted, for example, by a pregroove 14 which enables a read/write head to follow the track 9 during scanning. The pregroove 14 may be implemented as an indentation or an elevation, or may consist of a material having a different optical property than the material of the pregroove. The pregroove enables a read/write head to follow the track 9 during scanning. A track structure may also be formed by regularly spread sub-tracks which periodically cause servo signals to occur. The record carrier may be intended to carry real-time information, for example video or audio information, or other information, such as computer data.

Figure 1 c shows an example of a wobble of the track indicated as a detail 12 in Figure 1a. The Figure shows a periodic variation of the lateral position of the track, also called wobble. The variations cause an additional signal to arise in auxiliary detectors, e.g. in a satellite spot detector in a head of a scanning device. The wobble is, for example, frequency modulated and position information is encoded in the modulation. A comprehensive description of the prior art wobble as shown in Figure 1c in a writable CD system comprising disc information encoded in such a manner can be found in US 4,901,300 (PHN 12.398) and US 5,187,699 (PHQ 88.002). According to the invention the pregroove is provided with a pregroove modulation constituted by variations of a physical parameter related to the shape of the pregroove as discussed below.

Figure 1 d shows a wobble having a pregroove modulation. The Figure shows the wobbled pregroove 14 having a pregroove modulation 13. The shape of the pregroove, being the local cross-sectional shape, is changed according to an additional information signal to be encoded. Such change in shape affects the radiation reflected from the track during scanning, and can be detected thereby. As shown in the Figure the width of the pregroove is modulated according to a digital modulation pattern.

Groove shape (width, depth) modulation along the track can be used to generate an additional data channel. The unrecorded disc (R or RW type) then contains a mastered data channel. It is to be noted that any modulation pattern can be used, e.g. an analogue, slowly varying width or a modulation pattern having `constant length pulses' of width variation encoding the additional data by the position of the pulses. The additional data channel can be run length-modulated, frequency-modulated, amplitude-modulated, phase-modulated, or any other modulation scheme, which ever is best to be superimposed on the high-frequency data. To enable the separation of the main and additional data channels, the additional data channel has a significantly larger bit length (i.e. employs a lower spatial frequency) than the main (high-frequency) channel, and preferably employs a smaller amplitude variation than the high-frequency channel. A band-pass frequency filter can be used to separate the low and high frequency data pattern. It is noted that a frequency difference of a factor 10 easily leads to an additional data channel at 10% of the data capacity of the main channel. Using sophisticated signal processing algorithms the data capacity may be further increased. The proposed solution involves additional modulation of the amplitude of the HF-signal. This can be done without significantly affecting the content or quality of the HF-data. Thus discs incorporating such an additional data stream can still be read back on existing systems, without retrieving the extra data of course.

In an embodiment of the record carrier the depth of the pregroove is changed according to the modulation pattern. Further embodiments have a combination of width and depth, or any other suitable change of the shape which affects the radiation reflected from the track. It is noted that the resulting change of reflection should be of a similar type as the change of reflection due to the marks that encode the main recorded information, i.e. at least being detectable separately from the type of reflection changes due to the wobble. Having the same type of variations of the reflected radiation allows a single detector system and front-end circuit for generating a scanning signal suitable for retrieving both the main and the auxiliary information.

For manufacture of such a record carrier a master disc is made. During the mastering process, the wobble is written by a laser beam recorder, by imposing a small lateral offset of the nominal centre position of the track, and the intensity of the laser power of the mastering laser beam is further modulated to provide the pregroove shape modulation.

During readout of the data by scanning the wobble is detectable via a second type of variations of the radiation, such as variation of intensity in the cross section of the reflected beam detectable by detector segments or additional detectors for generating tracking servo signals. Detecting the wobble for a tracking servo system is well known from the above mentioned CD-R and CD-RW system.

It is noted that the auxiliary information may be used for control information that is processed in the scanning apparatus or a host computer, e.g. a code for accessing recorded information, an identifier to support copy-control, anti-piracy information and other accessing mechanisms. The control information in the additional data channel may represent a unique identifcation code, to protect illegal copying or a watermark. In an embodiment additional information is made available for the user. The additional information may be a software program, e.g. for processing, de-compressing or editing audio or video material, or a 'freeware' type version of a software program for the user to try out the functions of said software. In an embodiment the additional information is audio or video content information, such as a trailer of a movie or an MP3 version of some audio. The user may be interested in a full version of the movie or audio. A provider may make available such full versions, e.g. via the internet, which versions can then be downloaded to the record carrier and recorded thereon. Actually retrieving and accessing the full versions from record carrier is controlled via access codes also included in the pregroove modulation. For example the provider may offer to the user the trailer of a few movies or software programs, e.g. 5, and allow the user to record only one of them. The user then pays for one movie when buying the recordable disc. Hence a content provider sells the record carrier with one or more samples of content information, and makes full versions of said samples available to a user, in particular via a network like the internet.

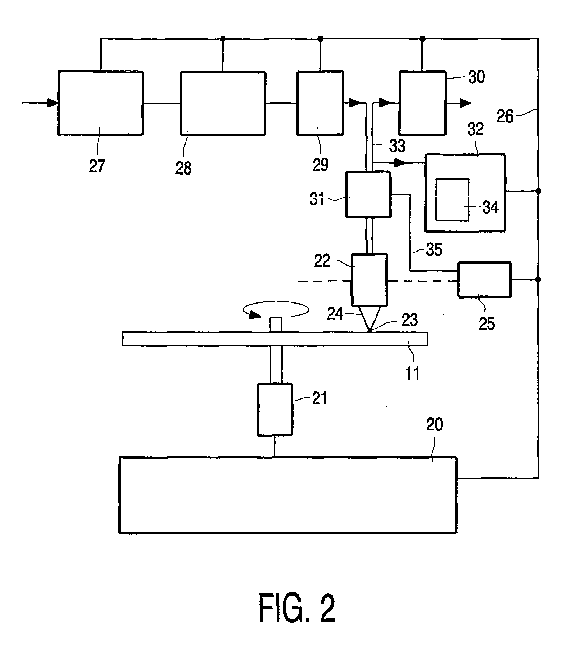

Figure 2 shows a scanning device having pregroove modulation detection. The device is provided with means for scanning a track on a record carrier 11 which means include a drive unit 21 for rotating the record carrier 11, a head 22, a servo unit 25 for positioning the head 22 opposite the track, and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head further comprises (not shown) a focusing actuator for moving the focus of the radiation beam 24 along the optical axis of said beam and a tracking actuator for fine positioning of the spot 23 in a radial direction on the center of the track. The tracking actuator may comprise coils for radially moving an optical element or may alternatively be arranged for changing the angle of a reflecting element. The focusing and tracking actuators are driven by actuator signals from the servo unit 25. For reading the radiation reflected by the information layer is detected by a detector of a usual type, e.g. a four-quadrant diode, in the head 22 for generating detector signals coupled to a front-end unit 31 for generating various scanning signals, including a main scanning signal 33 and error signals 35 for tracking and focusing. The error signals 35 are coupled to the servo unit 25 for controlling said tracking and focusing actuators. The main scanning signal 33 is processed by read processing unit 30 of a usual type including a demodulator, deformatter and output unit to retrieve the information.

The control unit 20 controls the scanning and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits. In an embodiment the control unit performs the functions of processing the additional information for accessing the main information as indicated above.

The device comprises a pregroove demodulation unit 32 for detecting pregroove modulation in the scanning signal as follows. The main scanning signal 33 is received from the front-end unit 31. Components in the signal 33 due to the marks of the main information are removed and components due to the pregroove modulation are isolated, e.g. by a filter unit 34 that has a low pass or band pass function. Timing recovery for reconstructing a data clock of the auxiliary signal can be based on the wobble frequency or on the pregroove modulation itself. In an embodiment timing recovery is based on the data clock retrieved for the main data. Synchronous detection can be applied for detecting the data bits of the auxiliary data. In an embodiment the pregroove modulation is provided with a channel code and/or error correction codes, and the detection unit is provided with a channel code demodulator and an error correction unit

The read processing unit includes a demodulator circuit like a slicer for demodulating the read signal into digital bit values. It is noted that a quick slicer can accommodate the variations caused by the secondary marks without further modification, in particular when the secondary marks cause a relatively small amplitude difference (e.g. 15%). In an embodiment the read processing unit 30 is adapted to detect the marks from the main scanning signal in the presence of pregroove signal components caused by the pregroove modulation. For example the unit may include a filter unit for substantially blocking the frequency range of the pregroove signal components. In an embodiment the read processing unit is coupled to the pregroove modulation unit for receiving a pregroove signal indicative of detected pregroove modulation. The pregroove signal is combined with the main scanning signal, e.g. subtracted, in order to substantially eliminate the pregroove signal components. Alternatively the slicer level of a bit detector unit may be adapted to the detected average reflection level as affected by the pregroove modulation.

In an embodiment the front-end unit 31 has a combination circuit that adds signals from several detectors for generating as the scanning signal a mirror signal indicative of the amount of radiation from a radiation beam reflected via the track. In an embodiment the combination circuit combines signals from every available detector segment. Such a signal indicative of the total reflection may be coupled separately to the pregroove demodulation unit 32.

In an embodiment the device is provided with means for recording information on a record carrier of a type, which is writable or re-writable, for example CD-R or CD-RW, or DVD+RW or BD. The device comprises write processing means for processing the input information to generate a write signal to drive the head 22, which means comprise an input unit 27, and modulator means comprising a formatter 28 and a modulator 29. For writing information the radiation is controlled to create optically detectable marks in the recording layer. The marks may be in any optically readable form, e.g. in the form of areas with a reflection coefficient different from their surroundings, obtained when recording in materials such as dye, alloy or phase change material, or in the form of areas with a direction of polarization different from their surroundings, obtained when recording in magneto-optical material.

Writing and reading of information for recording on optical disks and formatting, error correcting and channel coding rules are well-known in the art, e.g. from the CD or DVD system. In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

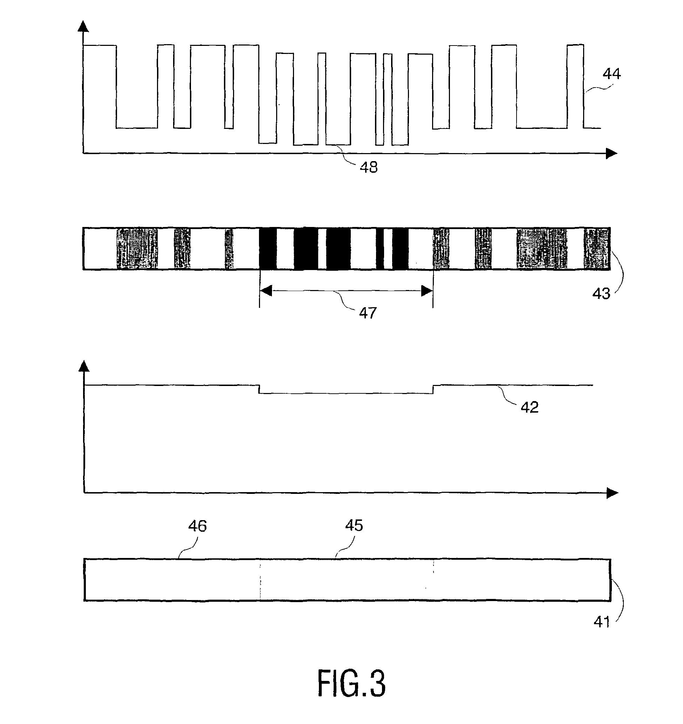

Figure 3 shows schematically an unwritten and written track. An unwritten track (top view) 41 has a first part 45 that has a larger depth due to the pregroove modulation and a second part 46 that has the normal depth. The resulting refection is given by a curve 42. The deeper part 45 results in a reduced reflection. The same section of the track after writing main data marks is shown as written track (top view) 43. The curve 44 indicates the resulting reflection. The deeper part 47 of the track results in a different reflection pattern 48. Effectively the depth of the pregroove results in interference of light rays from the pregroove and land parts besides the track. The interference results in amplitude variation of the detected radiation. If two groove depths are encountered, basically two reflection levels are generated when a scanning spot is positioned at the centre of the track.

The user records the high-frequency data both across the shallow and deep parts of the pregroove. After recording of user data, the additional data channel is present as a reflection modulation as indicated in curve 44.

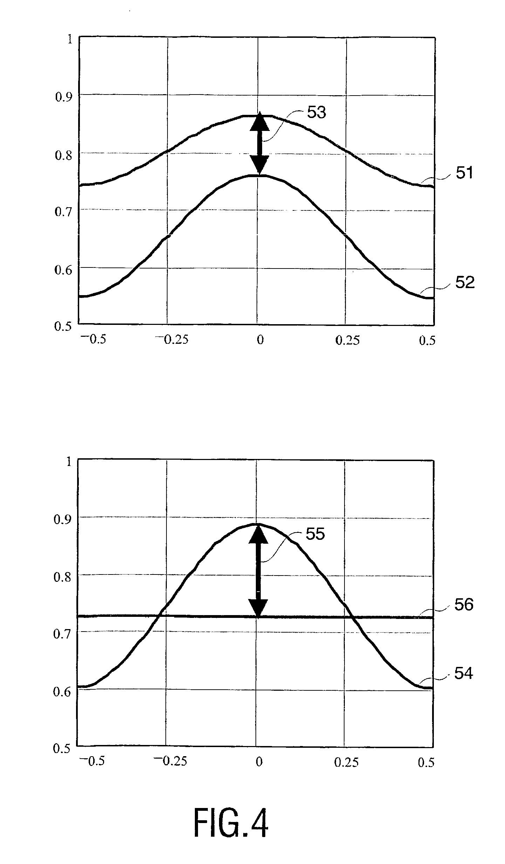

Figure 4 shows a reflection profile along the cross-track direction. In the horizontal direction a radial position is given, i.e. a spatial deviation of a read spot in a direction transverse to the track, 0 corresponding to a radiation spot centered on the pregroove, -0.5 and 0.5 a spot on to land just between two pregrooves. The upper graph shows the result of depth modulation of the pregroove as a function of the radial position, using a 40 % groove duty cycle (width to track pitch ratio). Curve 51 indicates the reflection level for a pregroove of 25 nm depth (using a blue laser), and curve 52 for a pregroove of 35 nm depth. Arrow 53 indicates the difference in reflection level that is available for detecting the pregroove depth modulation using a centered spot. The lower graph shows the effect of width modulation of the pregroove using a 30 nm groove depth for two different groove widths. Curve 54 indicates a 30% groove duty cycle, whereas a 50% groove duty cycle substantially results in a flat curve 56. It is noted that in practical circumstances the average reflection should not be a flat curve, because the pregroove still has the basic function of generation tracking error signals when the spot is off center. Arrow 55 indicates the difference in reflection level that is available for detecting the pregroove width modulation using a centered spot. The Figure shows that both methods lead to a distinguishable variation of the (on-groove) reflection enabling the detection of a low-frequency data channel

Although the invention has been mainly explained by embodiments using optical discs based on change of reflection, the invention is also suitable for other record carriers such as rectangular optical cards, magneto-optical discs or any other type of information storage system that has a pre-applied pattern on a writable record carrier. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software. Further, the scope of the invention is not limited to the embodiments, and the invention lies in each and every novel feature or combination of features described above.

## Claims

1. Record carrier of a writable type for recording information by writing marks in a track, the marks being detectable during scanning the track via a beam of radiation by a first type of variations of the radiation,
the record carrier comprising a pregroove (14) indicating the position of the track, the pregroove exhibiting a wobble constituted by displacements of the pregroove in a direction transverse to the longitudinal direction of the track, and the pregroove exhibiting a pregroove modulation (13) constituted by variations of a physical parameter related to the shape of the pregroove,
the wobble being detectable during said scanning by a second type of variations of the radiation, and the pregroove modulation being detectable during said scanning by further variations of said first type,
said first type of variations due to the marks substantially being in a first frequency range, **characterized in that** said first type of variations due to the pregroove modulation are substantially in a second, different frequency range for encoding additional information in the first type of variations of the pregroove modulation.

2. Record carrier as claimed in claim 1, wherein said first type of variations are variations of a reflection level of the track for the radiation.

3. Record carrier as claimed in claim 1, wherein said second type of variations due to the wobble are substantially in a wobble frequency range, whereas said first type of variations due to the pregroove modulation are substantially in a different frequency range.

4. Record carrier as claimed in claim 1, wherein said variations of the physical parameter related to the shape of the pregroove are constituted by variations of the depth or width of the pregroove.

5. Record carrier as claimed in claim 1, wherein the pregroove modulation is representing control information for controlling recovery of the information.

6. Record carrier as claimed in claim 1, wherein the pregroove modulation is representing program information, in particular access information for accessing information to be recorded by the marks, audio or video processing software, or content information representing at least part of an audio or video program.

7. Device for scanning a track on a record carrier (11) via a beam of radiation (24), the record carrier comprising a pregroove (14) indicating the position of the track, the pregroove exhibiting a wobble constituted by displacements of the pregroove in a direction transverse to the longitudinal direction of the track and the pregroove exhibiting a pregroove modulation (13) constituted by variations of a physical parameter related to the shape of the pregroove,
- the device comprising
- a head (22) for providing the beam, and
- a front-end unit (31) for generating a main scanning signal (33) for detecting marks in the track and the pregroove modulation during said scanning by a first type of variations of the radiation, and for generating an auxiliary scanning signal (35) for detecting the wobble during said scanning by a second type of variations of the radiation, the first type of variations due to the marks being substantially in a first frequency range,
**characterized in that**
- the device comprises a pregroove demodulation unit (32) for retrieving additional information encoded in said first type of variations of the pregroove modulation from a second frequency range from the main scanning signal (33), said second frequency range being different from the first frequency range.

8. Device as claimed in claim 7, wherein the pregroove demodulation unit (32) comprises a filter unit (34) for filtering the second frequency range from the main scanning signal (33).

9. Method of providing information to a user via a record carrier, the method comprising the steps of
- providing a record carrier of a writable type as claimed in any of the claims 1 to 6,
- providing information for recording on the record carrier in dependence on the pregroove modulation.

10. Method as claimed in claim 9, wherein the record carrier is provided with one or more samples of content information, and said providing of information for recording comprises making available to a user full versions of said samples, in particular via a network.

## Patentansprüche

1. Aufzeichnungsträger eines beschreibbaren Typs zum Aufzeichnen von Informationen durch Schreiben von Markierungen in einer Spur, wobei die Markierungen während des Abtastens der Spur mittels eines Strahls anhand eines ersten Typs von Änderungen der Strahlung erkennbar sind,
wobei der Aufzeichnungsträger eine Pregroove (14) umfasst, welche die Position der Spur angibt, wobei die Pregroove einen Wobble (Welligkeit) aufweist, der durch Verschiebungen der Pregroove in einer Richtung quer zur Längsrichtung der Spur gebildet wird, und wobei die Pregroove eine Pregroove-Modulation (13) aufweist, die durch Änderungen eines physikalischen Parameters gebildet wird, der mit der Form der Pregroove zusammenhängt,
wobei der Wobble während des Abtastens anhand eines zweiten Typs von Änderungen der Strahlung erkennbar ist, und wobei die Pregroove-Modulation während des Abtastens anhand weiterer Änderungen des ersten Typs erkennbar ist,
wobei die Änderungen des ersten Typs, die auf die Markierungen zurückzuführen sind, sich im Wesentlichen in einem ersten Frequenzbereich befinden, **dadurch gekennzeichnet, dass** die Änderungen des ersten Typs, die auf die Pregroove-Modulation zurückzuführen sind, sich im Wesentlichen in einem zweiten, anderen Frequenzbereich befinden, zum Codieren zusätzlicher Informationen in den Änderungen des ersten Typs der Pregroove-Modulation.

2. Aufzeichnungsträger nach Anspruch 1, wobei die Änderungen des ersten Typs Änderungen eines Reflexionsgrades der Spur für die Strahlung sind.

3. Aufzeichnungsträger nach Anspruch 1, wobei die Änderungen des zweiten Typs, die auf den Wobble zurückzuführen sind, sich im Wesentlichen in einem Wobbelfrequenzbereich befinden, während sich die Änderungen des ersten Typs, die auf die Pregroove-Modulation zurückzuführen sind, im Wesentlichen in einem anderen Frequenzbereich befinden.

4. Aufzeichnungsträger nach Anspruch 1, wobei die Änderungen des physikalischen Parameters, der mit der Form der Pregroove zusammenhängt, in Änderungen der Tiefe oder Breite der Pregroove bestehen.

5. Aufzeichnungsträger nach Anspruch 1, wobei die Pregroove-Modulation Steuerungsinformationen zum Steuern der Rückgewinnung der Informationen darstellt.

6. Aufzeichnungsträger nach Anspruch 1, wobei die Pregroove-Modulation Programminformationen darstellt, insbesondere Zugriffsinformationen zum Zugreifen auf Informationen, die durch die Markierungen aufgezeichnet werden sollen, Audio- oder Video-Verarbeitungssoftware, oder Inhaltsinformationen, die wenigstens einen Teil eines Audio- oder Videoprogramms repräsentieren.

7. Einrichtung zum Abtasten einer Spur auf einem Aufzeichnungsträger (11) mittels eines Strahls (24), wobei der Aufzeichnungsträger eine Pregroove (14) umfasst, welche die Position der Spur angibt, wobei die Pregroove einen Wobble (Welligkeit) aufweist, der durch Verschiebungen der Pregroove in einer Richtung quer zur Längsrichtung der Spur gebildet wird, und wobei die Pregroove eine Pregroove-Modulation (13) aufweist, die durch Änderungen eines physikalischen Parameters gebildet wird, der mit der Form der Pregroove zusammenhängt,
- wobei die Einrichtung umfasst:
- einen Kopf (22) zum Bereitstellen eines Strahls, und
- eine Frontend-Einheit (31) zum Erzeugen eines Hauptabtastsignal (33) zum Erkennen von Markierungen in der Spur und der Pregroove-Modulation während des Abtastens anhand eines ersten Typs von Änderungen der Strahlung und zum Erzeugen eines Hilfsabtastsignal (35) zum Erkennen des Wobbles während des Abtastens anhand eines zweiten Typs von Änderungen der Strahlung, wobei die Änderungen des ersten Typs, die auf die Markierungen zurückzuführen sind, sich im Wesentlichen in einem ersten Frequenzbereich befinden,
**dadurch gekennzeichnet, dass**
- die Einrichtung eine Pregroove-Demodulationseinheit (32) zum Wiedergewinnen zusätzlicher Informationen, die in den Änderungen des ersten Typs der Pregroove-Modulation codiert sind, aus einem zweiten Frequenzbereich aus dem Hauptabtastsignal (33) umfasst, wobei der zweite Frequenzbereich von dem ersten Frequenzbereich verschieden ist.

8. Einrichtung nach Anspruch 7, wobei die Pregroove-Demodulationseinheit (32) eine Filtereinheit (34) zum Herausfiltern des zweiten Frequenzbereiches aus dem Hauptabtastsignal (33) umfasst.

9. Verfahren zum Liefern von Informationen an einen Benutzer mittels eines Aufzeichnungsträgers, wobei das Verfahren die folgenden Schritte umfasst:
- Liefern eines Aufzeichnungsträgers eines beschreibbaren Typs nach einem der Ansprüche 1 bis 6,
- Liefern von Informationen zum Aufzeichnen auf dem Aufzeichnungsträger in Abhängigkeit von der Pregroove-Modulation.

10. Verfahren nach Anspruch 9, wobei der Aufzeichnungsträger mit einer oder mehreren Kostproben von Inhaltsinformationen geliefert wird und das Liefern von Informationen zum Aufzeichnen das Verfügbarmachen von Vollversionen dieser Kostproben für einen Benutzer, insbesondere über ein Netz, umfasst.

## Revendications

1. Support d'enregistrement de type inscriptible pour enregistrer des informations en écrivant des marques sur une piste, les marques étant détectables pendant un balayage de la piste via un faisceau de rayonnement par un premier type de variations du rayonnement,
le support d'enregistrement comprenant un pré-sillon (14) indiquant la position de la piste, le pré-sillon présentant une oscillation constituée de déplacements du pré-sillon dans une direction transversale à la direction longitudinale de la piste, et le pré-sillon présentant une modulation de pré-sillon (13) constituée par des variations d'un paramètre physique relatif à la forme du pré-sillon,
l'oscillation étant détectable pendant ledit balayage par un deuxième type de variations du rayonnement, et la modulation de pré-sillon étant détectable pendant ledit balayage par d'autres variations dudit premier type,
ledit premier type de variations dues aux marques se situant substantiellement dans un premier intervalle de fréquence, **caractérisé en ce que** ledit premier type de variations dues à la modulation de pré-sillon se situe substantiellement dans un deuxième intervalle de fréquence, différent, pour coder des informations additionnelles dans le premier type de variations de la modulation de pré-sillon.

2. Support d'enregistrement selon la revendication 1, dans lequel ledit premier type de variations concerne des variations d'un niveau de réflexion de la piste pour le rayonnement.

3. Support d'enregistrement selon la revendication 1, dans lequel ledit deuxième type de variations dues à l'oscillation se situe substantiellement dans un intervalle de fréquence d'oscillation, alors que ledit premier type de variations dues à la modulation de pré-sillon se situe substantiellement dans un intervalle de fréquence différent.

4. Support d'enregistrement selon la revendication 1, dans lequel lesdites variations du paramètre physique relatives à la forme du pré-sillon sont constituées de variations de la profondeur ou de la largeur du pré-sillon.

5. Support d'enregistrement selon la revendication 1, dans lequel la modulation de pré-sillon représente des informations de contrôle pour contrôler la récupération des informations.

6. Support d'enregistrement selon la revendication 1, dans lequel la modulation de pré-sillon représente des informations de programme, en particulier des informations d'accès pour accéder à des informations à enregistrer par les marques, du logiciel de traitement audio ou vidéo, ou des informations de contenu représentant au moins une partie d'un programme audio ou vidéo.

7. Dispositif pour balayer une piste sur un support d'enregistrement (11) via un faisceau de rayonnement (24), le support d'enregistrement comprenant un pré-sillon (14) indiquant la position de la piste, le pré-sillon présentant une oscillation constituée de déplacements du pré-sillon dans une direction transversale à la direction longitudinale de la piste et le pré-sillon présentant une modulation de pré-sillon (13) constituée par des variations d'un paramètre physique relatif à la forme du pré-sillon,
- le dispositif comprenant :
- une tête (22) pour fournir le faisceau, et
- une unité frontale (31) pour générer un signal de balayage principal (33) pour détecter des marques dans la piste et la modulation de pré-sillon pendant ledit balayage par un premier type de variations du rayonnement, et pour générer un signal de balayage auxiliaire (35) pour détecter l'oscillation pendant ledit balayage par un deuxième type de variations du rayonnement.,
le premier type de variations dues aux marques se situant substantiellement dans un premier intervalle de fréquence, **caractérisé en ce que** :
- le dispositif comprend une unité de démodulation de pré-sillon (32) pour extraire des informations additionnelles codées dans ledit premier type de variations de la modulation de pré-sillon à partir d'un deuxième intervalle de fréquence à partir du signal de balayage principal (33), ledit deuxième intervalle de fréquence étant différent du premier intervalle de fréquence.

8. Dispositif selon la revendication 7, dans lequel l'unité de démodulation de pré-sillon (32) comprend une unité de filtrage (34) pour filtrer le deuxième intervalle de fréquence à partir du signal de balayage principal (33).

9. Procédé de fourniture d'informations à un utilisateur via un support d'enregistrement, le procédé comprenant les étapes suivantes :
- fourniture d'un support d'enregistrement d'un type inscriptible selon l'une quelconque des revendications 1 à 6,
- fourniture d'informations pour enregistrement sur le support d'enregistrement en fonction de la modulation de pré-sillon.

10. Procédé selon la revendication 9, dans lequel le support d'enregistrement possède un ou plusieurs échantillons d'informations de contenu, et ladite fourniture d'informations pour enregistrement comprend la mise à disposition à un utilisateur de versions complètes desdits échantillons, en particulier via un réseau.
